# EUROPÄISCHE PATENTSCHRIFT

(11) **EP 1 602 445 B1**
(45) Veröffentlichungstag und Bekanntmachung des Hinweises auf die Patenterteilung: **07.03.2007**
(21) Anmeldenummer: 05104707.4
(22) Anmeldetag: 01.06.2005
(51) Int. Cl.: B24D 7/18, A61C 13/00

(54) **Verfahren, Werkzeug und Bearbeitungsmachine zur Herstellung von Zahnersatzteilen**
Method, tool and machine tool for the manufacturing of dental implant parts
Procédé, outil et machine d'usinage pour la fabrication d'éléments de prothèse dentaire

(30) Priorität: 01.06.2004 DE 102004026917
(43) Veröffentlichungstag der Anmeldung: 07.12.2005
(73) Patentinhaber: Sirona Dental Systems GmbH, 64625 Bensheim (DE)
(72) Erfinder: Basler, Franz, 68775, Ketsch (DE); Pfeiffer, Joachim, 64625, Bensheim (DE); Niewiadomski, Klaus, 64653 Lorsch (DE)
(74) Vertreter: Sommer, Peter

(56) Entgegenhaltungen:
- BE-A1- 903 012
- DE-A1- 4 030 176
- DE-C1- 19 928 002
- US-A- 3 894 339

## Beschreibung

### Technisches Gebiet

Die Erfindung betrifft ein Verfahren und ein Werkzeug zur Herstellung von Zahnersatzeilen mittels Querseitenbearbeitung und Längsvorschubbearbeitung, gemäß dem Oberbegriff des Anspruchs 1 bzw. 7.

Ein solches Verfahren bzw. Werkzeug ist aus DE 19 928 002 C1 bekannt.

### Stand der Technik

Zur Herstellung von Zahnersatzteilen sind Verfahren, Bearbeitungsmaschinen und Werkzeuge bekannt, mit denen ein Rohling fräsend und/oder schleifend bearbeitet wird.

Die DE 199 28 002 C1 beschreibt eine Vorrichtung und ein Verfahren zur Erstellung von medizinischen Passkörpern. Die darin verwendeten Schleifwerkzeuge haben zylindrische Mantelflächen und es kann eine Kegelspitze mit einem Spitzenradius vorhanden sein.

In der DE 40 30 176 A1 ist ein Verfahren zum Kalibrieren eines motorisch angetriebenen Werkzeugs in einer Bearbeitungsmaschine beschrieben. Die Bearbeitungsmaschine setzt als Werkzeug einen zylindrischen Fingerschleifer ein.

### Technische Aufgabe

Die zur Herstellung von Zahnersatzteilen eingesetzten Werkzeuge müssen in der Lage sein, z.B. eine Zahnkrone passgenau an die Geometrie des Kiefers anzupassen oder bei einem Zahnersatzteil eine komplexe Zahnoberfläche in allen Details nachzubilden. Dazu muss von einem Rohling einerseits sehr viel Material abgetragen werden, es kommt aber auch häufig vor, dass enge Vertiefungen ausgearbeitet werden müssen. Aus diesem Grund werden häufig Werkzeuge verwendet, die eine vergleichsweise spitze Form haben, z.B. die eines Langkegels. Solche Bearbeitungswerkzeuge haben jedoch mehrere Nachteile. Zum einen müssen die Bearbeitungsmaschinen, um eine hohe Präzision zu erreichen, in regelmäßigen Abständen kalibriert werden. Die Bearbeitungswerkzeuge unterliegen einem naturgegebenen Verschleiß und die exakte Form des Werkzeugs muss in die Kalibrierung mit einbezogen werden. Insbesondere bei Bearbeitungswerkzeugen mit nur schrägen Konturen erweist sich eine exakte Vermessung des Werkzeugs als sehr schwierig.

Außerdem bewirkt das nicht rechtwinklige Aufliegen eines langkegelförmigen Werkzeugs am Werkstück bei der Bearbeitung von Werkstücken zusätzliche Kräfte auf das Werkzeug, die bei der Konstruktion eines solchen Werkzeugs berücksichtigt und meist durch größere Materialstärken kompensiert werden müssen. Mit diesen dickeren Werkzeugen ist es jedoch nicht mehr möglich, alle Vertiefungen herauszuarbeiten. Die schräge Bearbeitungsfläche bewirkt weiterhin in bestimmten Situationen regelmäßig ein "Aufschwimmen" des Werkzeugs, also ein durch einseitige Belastungen entstehendes elastisches Verbiegen des Werkzeugs, welche zu einem Abweichen vom geplanten Bearbeitungsweg führt und somit eine verringerte Bearbeitungsgenauigkeit verursacht.

Des Weiteren ist bekannt, dass Werkzeuge in Langkegelform beim Herausarbeiten von Vertiefungen in spröden Materialien, wie sie meist bei der Herstellung von Zahnersatzteilen verwendet werden, Materialsprengungen verursachen können.

Der vorliegenden Erfindung liegt daher die Aufgabe zugrunde, über die oben genannten Nachteile bei der Bearbeitung von Zahnersatzteilen mit derartigen Werkzeugen hinwegzukommen und ein Verfahren, eine Bearbeitungsmaschine und ein Werkzeug bereitzustellen, das eine hoch präzise Bearbeitung mit möglichst wenigen Werkzeugwechseln und langer Lebensdauer der eingesetzten Werkzeuge ermöglicht.

### Offenbarung der Erfindung

Erfindungsgemäß werden Zahnersatzteile in einer Bearbeitungsmaschine mit einem Verfahren bearbeitet, das ein Werkzeug zum Querseiten- und zum Längsvorschubbearbeiten einsetzt. Das Werkzeug besitzt unterschiedliche Durchmesser aufweisende abgestufte Bereiche mit jeweils einer Mantelfläche zur Querseitenbearbeitung und jeweils einer Stirnfläche zur Längsvorschubbearbeitung, wobei der Durchmesser der abgestuften Bereiche zur Stirnseite hin kleiner wird.

Mit diesem Verfahren, bei sowohl eine Bearbeitung in Querrichtung zur Werkzeugachse als auch in Längsrichtung der Werkzeugachse durchgeführt werden kann, lassen sich einerseits aufgrund der schlanken Werkzeugspitze hinreichend feine Strukturen herausarbeiten und andererseits ein großer Materialabtrag erzeugen, wobei die Führung des Werkzeugs verbessert wird, was somit bei erhöhter Präzision zu einer schnelleren Bearbeitung führt.

Vorteilhafterweise erfolgt die Bearbeitung im Wesentlichen durch Schleifen des Rohlings. Dadurch ist es möglich, auch hochfeste Materialien, wie sie in der Zahnmedizin häufig eingesetzt werden, zu bearbeiten.

Vorteilhafterweise ist der Durchmesser des verwendeten Werkzeugs in den abgestuften Bereichen jeweils konstant. Dies erleichtert einerseits die Vermessung des Werkzeugs zur Feststellung der Abnutzung und zur Lagebestimmung der Werkzeugaußenkontur und auch die bereits erwähnten Nachteile, die bei Verwendung von Werkzeugen mit schrägen Bearbeitungsflächen häufig auftreten, werden vermieden.

Vorteilhafterweise nimmt der Durchmesser der abgestuften Bereiche zur Stirnseite hin derart ab, dass die Einhüllende des Werkzeugs einen Kegel beschreibt, der einen Öffnungswinkel zwischen 4 und 20 Grad aufweist. Somit ist es möglich, auch enge Vertiefungen auszuarbeiten.

Eine besonders vorteilhafte Weiterentwicklung des Verfahrens bezieht sich auf die Verwendung eines Werkzeugs, das eine Beschichtung aufweist, die Schleifkörner enthält. Damit lässt sich das Werkzeug im Hinblick auf seine Funktionalität und Haltbarkeit optimieren. Derartige Beschichtungen gehören seit langem zum Stand der Technik und sind wirkungsvoll.

Vorteilhafterweise ist die Beschichtung in verschiedenen Bereichen des Werkzeugs unterschiedlich gestaltet. So kann es Bereiche geben, in denen beispielsweise eine grobe Beschichtung für hohen Materialabtrag vorhanden ist und es andere Bereiche mit einer feinen Beschichtung zum präzisen Bearbeiten des Zahnersatzteils gibt. Besonders vorteilhaft ist es, wenn die Korngröße in verschiedenen Bereichen unterschiedlich groß ist. Damit lässt sich die oben beschriebene vorteilhafte Aufteilung zwischen groben und weniger groben Schleifbereichen erzielen. Darüber hinaus kann auch die Schichtdicke der Beschichtung den Abnutzungen bei der Bearbeitung angepasst sein, indem in Bereichen erhöhter Abnutzung eine größere Schichtdicke erzeugt wird.

Vorteilhafterweise lässt sich das Verfahren mindestens solange durchführen, bis die Beschichtung des Werkzeugs auf die Hälfte der ursprünglichen Dicke oder mehr abgenutzt ist. Damit kann einerseits eine gleich bleibende Materialbearbeitung und andererseits eine hohe Lebensdauer des Werkzeugs erreicht werden. Die Abnutzung kann durch eine Kalibrierung der Bearbeitungsmaschine korrigiert werden.

Dies ermöglicht lange Standzeiten und einen wirtschaftlichen Einsatz des Werkzeugs zur Durchführung des Verfahrens.

Weitere Gegenstände der Erfindung sind ein Werkzeug und eine Bearbeitungsmaschine zur Durchführung des Verfahrens.

Das Werkzeug weist unterschiedliche Durchmesser aufweisende abgestufte Bereiche mit jeweils einer Mantelfläche zur Querseitenbearbeitung und mit jeweils einer Stirnfläche zur Längsvorschubbearbeitung auf, wobei der Durchmesser der abgestuften Bereiche zur Stirnseite hin kleiner wird.

Vorzugsweise ist der Durchmesser des Werkzeugs in den abgestuften Bereichen jeweils konstant und nimmt zur Stirnseite hin so ab, dass die Einhüllende einen Kegel beschreibt, der einen Öffnungswinkel zwischen 4 und 20 Grad aufweist.

Vorteilhafterweise weist das Werkzeug einen Übergang von der stirnseitigen Mantelfläche mit einem ersten Radius zur Stirnseite mit einem gegenüber dem ersten Radius kleineren zweiten Radius eine vorgegebene Oberfläche auf, die eine Krümmung gemäß einem dritten Radius ebenfalls kleiner als der erste Radius aufweist.

Mit dieser Geometrie der Oberfläche des Übergangs kann z.B. eine Abrutschneigung auf einer schrägen Fläche verringert werden. Theoretisch ideal wäre ein möglichst kleiner dritter Radius, da dann die Fläche mit Querkomponente, welche beim Längsvorschub des Werkzeugs eine Querkraft erzeugt, besonders klein ist. Allerdings sind der Herstellbarkeit des Werkzeugs technische Grenzen gesetzt, sodass anstelle eine scharfe Kante in der Praxis eine Abrundung entsteht. Selbst wenn aber eine Kante ausgebildet werden könnte, wäre diese Kante aufgrund der Abnutzung lange vor Erreichen der eigentlichen Lebensdauer des Werkzeugs nicht mehr scharfkantig, sondern gebrochen.

Es ist auch möglich, statt einer ebenen Stirnseite andere Formen auszubilden. Insbesondere eine kugel- oder linsenförmige Stirnseite statt einer flachen Stirnseite mit einem Übergang zu den Mantelflächen sei hier erwähnt. An dem Übergang von einer radialen Mantelfläche zur benachbarten radialen Mantelfläche kann der Übergang vorzugsweise eine waagrechte Oberfläche aufweisen, die als ringförmige ebene Stirnseite angesehen werden kann. Auch hier können andere Formen vorgesehen sein.

Eine vorteilhafte Ausführung besteht darin, dass die Stirnfläche eine Kegelspitze aufweist, welche einen Kegelwinkel von 30° bis 60°, insbesondere von 45° aufweist. Die Kegelspitze verläuft damit innerhalb der Einhüllenden. Mit einer derartigen Spitze ist das Herausarbeiten feiner Strukturen wie Fissuren am Zahn möglich, ohne dass der Effekt des Aufschwimmens des Werkzeugs wesentlich beeinflusst wird.

Eine besonders vorteilhafte Weiterentwicklung des Verfahrens bezieht sich auf die Verwendung eines Werkzeugs, das eine Beschichtung aufweist. Damit lässt sich das Werkzeug im Hinblick auf seine Funktionalität und Haltbarkeit optimieren.

Vorteilhafterweise ist die Beschichtung in verschiedenen Bereichen des Werkzeugs unterschiedlich gestaltet. So kann es Bereiche geben, in denen beispielsweise eine grobe Beschichtung für hohen Materialabtrag vorhanden ist und es andere Bereiche mit einer feinen Beschichtung zum hoch präzisen Bearbeiten des Zahnersatzteils gibt. Darüber hinauskann es vorteilhaft sein, wenn die Schichtdicke der Beschichtung im Bereich der Werkzeugspitze größer ist, da dort die Abnutzung am größten ist.

Für den Einsatz als Schleifwerkzeug erweist es sich als vorteilhaft, wenn die Beschichtung Schleifkörner enthält.

Derartige Beschichtungen gehören seit langem zum Stand der Technik und sind kostengünstig und wirkungsvoll.

Besonders vorteilhaft ist es, wenn die Korngröße in verschiedenen Bereichen unterschiedlich groß ist. Damit lässt sich die oben beschriebene vorteilhafte Aufteilung zwischen groben und weniger groben Schleifbereichen erzielen.

Vorteilhafterweise kann die Beschichtung bei der Bearbeitung zumindest bis auf die Hälfte der ursprünglichen Dicke abgenutzt werden. Die Abnutzung kann durch eine Kalibrierung der Bearbeitungsmaschine korrigiert werden. Dies ermöglicht lange Standzeiten und einen wirtschaftlichen Einsatz des Werkzeugs zur Durchführung des Verfahrens.

Die Bearbeitungsmaschine zur Durchführung des Verfahrens unter Verwendung des Werkzeugs nach einem der Ansprüch 7 bis 16 weist eine an das Werkzeug und das Verfahren angepasste Steuerung auf.

### Kurze Beschreibung der Zeichnungen

Das erfindungsgemäße Verfahren wird anhand der Zeichnung erläutert. Es zeigen:
- Fig. 1: einen Querschnitt eines Werkzeugs zur Durchführung des erfindungsgemäßen Verfahrens, die
- Fig. 2: Ausschnitt des Querschnitts aus Fig. 1 im Bereich der Stirnseite, die
- Fig. 3: eine Bearbeitungsmaschine, die ein Werkzeug nach Fig. 1 einsetzt, die
- Fig. 4: ein Werkzeug bei der Bearbeitung eines Werkstücks. Ausführungsform der Erfindung

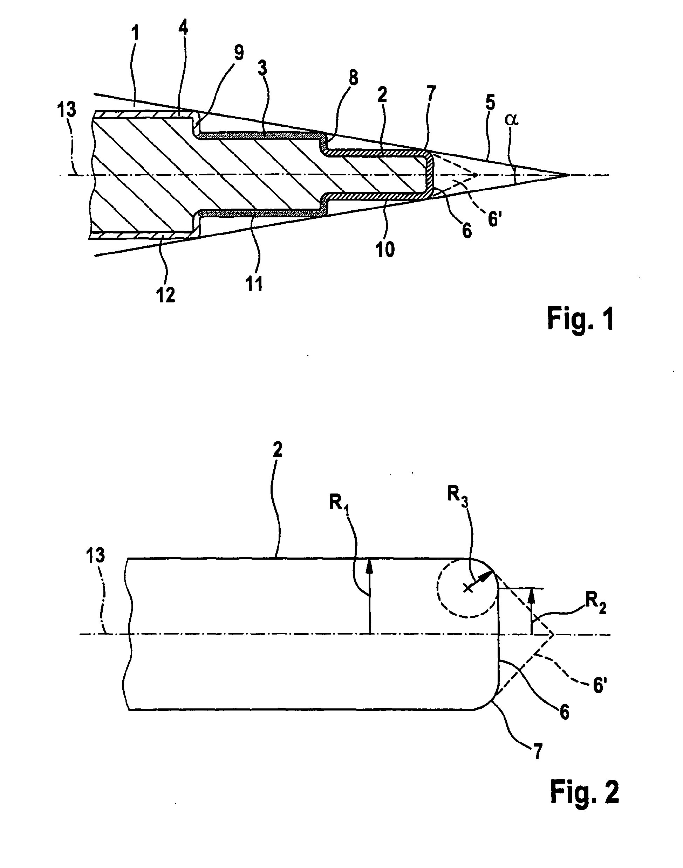

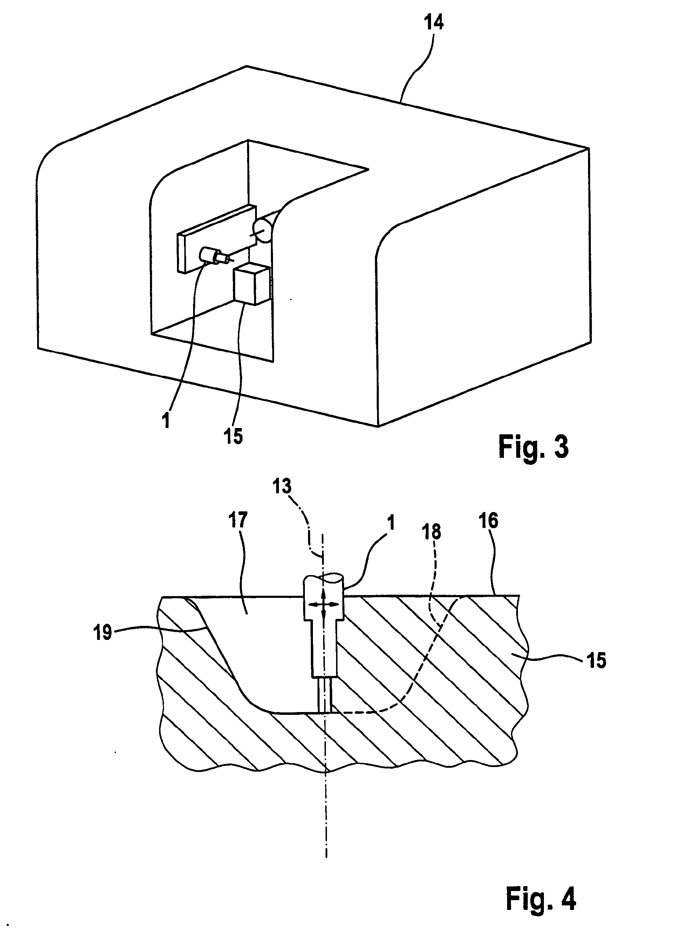

Die **Fig. 1** zeigt einen Querschnitt durch ein rotationssymmetrisches Werkzeug 1 zur Durchführung des erfindungsgemäßen Verfahrens in einer erfindungsgemäßen Bearbeitungsmaschine, wie sie in Fig. 3 dargestellt wird. Zur schleifenden Querseitenbearbeitung sind mehrere zylindrische Seitenflächen 2, 3, 4 vorgesehen, deren Länge und jeweilige Radiendifferenz so aufeinander abgestimmt sind, dass ihre Kanten eine kegelförmige Einhüllende 5 mit einem Winkel α von hier etwa 18° bilden. Am häufigsten werden Zylinderschleifer mit einem Kegelwinkel von in etwa 4° verwendet, der hier dargestellte relativ große Kegelwinkel dient vor allem der besseren Darstellbarkeit.

An der Spitze des Werkzeugs 1 ist eine Stirnseite 6 vorgesehen. Der Übergang von der Stirnseite 6 zu der ersten Seitenfläche 2 weist einen definierten Übergang 7 auf, der hier im Querschnitt gesehen kreisförmig ausgebildet ist.

Darüber hinaus ist eine alternative Ausführung mit einer Kegelspitze 6' in durchbrochenen Linien dargestellt, welche einen Kegelwinkel von 30° bis 60°, hier 45° aufweist und damit innerhalb der Einhüllenden 5 verläuft.

An den Übergängen der zylindrischen Seitenflächen 2, 3, 4 sind weitere Stirnflächen 8, 9 vorgesehen, wobei die Übergänge eine ähnliche Kontur wie der Übergang 7 aufweisen. Die weiteren Stirnflächen 8,9 selbst sind als Ringflächen ausgebildet und symmetrisch um eine Mittelachse 13 des Werkzeugs 1 angeordnet.

Die Oberfläche des Werkzeugs 1 besteht aus verschiedenen Beschichtungen 10, 11, 12, die mittels bekannter Verfahren auf dem Rohmaterial des Werkzeugs aufgebracht werden können. Die Beschichtungen 10, 11, 12, enthalten unterschiedliche Korngrößen der Schleifkörner, die mit steigendem Werkzeugdurchmesser grober werden. Die Beschichtung 10 ist somit zur feinen Nachbearbeitung und zum Herausarbeiten feiner Konturen geeignet, wohingegen die Beschichtung 12 einen höheren Materialabtrag erzielt. Dabei ist es insbesondere von Vorteil, eine Kegelspitze 6' zu verwenden.

Der Einsatz eines derartigen Werkzeugs empfiehlt sich, wenn der Bearbeitungsplan zur Herstellung eines Zahnersatzteils aus einem Rohling gezielt in eine Querseitenbearbeitung und eine Längsvorschubbearbeitung aufgeteilt wird. Dann ist es möglich, dass das Werkzeug immer nur eine senkrechte Kraft auf das Werkstück ausübt, was einerseits die auf das Werkzeug einwirkenden Belastungen reduziert und andererseits ein mögliches Aufschwimmen verhindert und damit die Fertigungspräzision erhöht.

In der **Fig. 2** ist ein Ausschnitt aus Fig. 1 gezeigt, um die geometrischen Verhältnisse des Übergangs von der Stirnseite 6 zur ersten Mantelfläche 2 genauer darzustellen. Ausgehend von der Mittelachse 13 liegt die Mantelfläche 2 auf einem Radius R₁ und die Stirnseite 6 erstreckt sich über einen Radius R₂, sodass ein kreisförmiger ebener Bereich vorliegt.

Der Übergang 7 hat eine Krümmung mit einem Radius R₃, der so bemessen ist, dass ein tangentialer Anschluss an die Stirnseite 6 und den ersten Mantel 2 entsteht. Dies ist nicht zwingend erforderlich und der Radius R₃ kann auch so gewählt werden, dass kein tangentialer Anschluss des Übergangs 7 entsteht, sondern vielmehr eine Kante ausgebildet ist, die auch als Radius ausgebildet sein kann.

In **Fig. 3** ist eine erfindungsgemäße Bearbeitungsmaschine 14 dargestellt. Ein Werkzeug 1 und ein Werkstück 15 sind relativ zueinander verstellbar gehaltert, sodass die gewünschte Kontur mit dem Werkzeug 1 aus dem Werkstück 15 herausgearbeitet werden kann.

**Fig. 4** zeigt das Werkzeug 1 bei der Bearbeitung des Werkstücks 15 im Detail. Aufgrund der im Wesentlichen ausschließlich radial und senkrecht zur Längsachse 13 des Werkzeugs angeordneten Mantelflächen lässt sich die Bearbeitung des Werkstücks 15 vollständig in die Komponenten Querseiten- und Längsvorschubbearbeitung zerlegen. Wird das Werkzeug gemäß dieser Komponenten bewegt, so ermöglicht dies eine annähernde Gleichrichtung von Werkzeugvorschub und Krafteinwirkung. Diese Gleichrichtung ist beispielsweise bei einem Kegelschleifer aufgrund seiner Mantelfläche mit gleichzeitig vorhandenen Längs- und Queranteilen nicht gegeben, was zu den bereits zuvor beschriebenen nachteiligen Effekten, insbesondere zum Aufschwimmen führt.

Es ist aber auch möglich, unter Verwendung der komponentenweisen Zerlegung eine Steuerung des Werkzeugs so zu verwirklichen, dass es gleichzeitig in Längsrichtung und in Querrichtung zugestellt wird, sodass ein kombinierter Längs-Quervorschub des Werkzeugs erfolgt. Dies ist dann ohne weiteres möglich, wenn der Vorschub in einer Größenordnung erfolgt, die innerhalb der Ausdehnung der Schneidkanten liegt, d.h. bei einer Beschichtung mit Schleifkörnern, die z.B. 60 µm aus dem Grundmaterial der Beschichtung herausragen, kann der Vorschub 10 µm betragen, also nur den sechsten Teil davon. Es ist ohne weiteres verständlich, dass dieser Vorschub bei derartigen Bedingungen realisiert werden kann, ohne dass eine relevante Beeinträchtigung der Genauigkeit eintritt. Bei Verwendung einer Beschichtung, deren Schleifkörner nur 10 µm herausragen, müsste der Vorschub hingegen wohl verringert werden.

Weiterhin kann das Werkzeug so gesteuert werden, dass der Vorschub für den nächsten Bearbeitungsschritt ausschließlich als Längsvorschub erfolgt, wenn dieser größer als der vorgesehene Quervorschub ist.

Der Bearbeitungsplan ist dabei so ausgelegt, dass der Anteil der Querseitenbearbeitung maximiert wird, da an den zylindrischen Mantelflächen 2, 3, 4 wesentlich mehr Schleifmaterial in vorhanden ist als an den vergleichsweise kleinen Stirnflächen 6, 8, 9 (Fig. 1).

Bei der Bearbeitung taucht das Werkzeug 1 zuerst mit der Stirnseite 6 in das Werkstück 15 ein. Je nach Bearbeitungstiefe kommen die anderen Stirnseiten 8, 9 (Fig. 1) mit dem Werkstück 15 zum Eingriff. Nach Erreichen der erforderlichen Tiefe arbeitet das Werkzeug 1 dann seitlich unter Einsatz der Mantelflächen 2, 3, 4 (Fig. 1) die Vertiefung 17 entlang der gewünschten Kontur 18 heraus, ohne dass die Stirnseiten 6, 8, 9 (Fig. 1) weiter belastet werden. Die gegenüberliegenden Flanken einer solchen Vertiefung 17 können durch die Form des Werkzeugs bedingt höchstens den gleichen Winkel α der Einhüllenden des Werkzeugs haben.

Da in den Bereichen nahe der Oberfläche 16 des Werkstücks 15 in der gleichen Zeit mehr Material abgetragen werden muss als in den tiefer liegenden Regionen, ist eine mit wachsendem Abstand zur Stirnseite 6 grober werdende Beschichtung von Vorteil, da das Werkzeug 1 insgesamt schneller geführt werden kann.

Die in Fig. 1 dargestellte Beschichtungen 10 - 12 der Mantelflächen 2-4 sind so ausgebildet, dass mit den Mantelflächen 3,4 eine Grobbearbeitung erfolgt, wohingegen mit der Mantelfläche 2 eine Feinbearbeitung erfolgt. Um einen stärkeren Verschleiß der Beschichtung 10 an der Mantelfläche 2 im Bereich der Werkzeugspitze bei der Feinbearbeitung auszugleichen, kann die Beschichtung 10 eine größere Dicke aufweisen als die Beschichtungen 11, 12 und dafür beispielsweise doppellagig oder mehrlagig ausgebildet sein. Dies gilt selbstverständlich auch für die Beschichtung an den Stirnseiten 6, 8 oder 9 oder an dem Übergang 7 sowie den entsprechenden Übergängen von den Stirnseiten 8, 9 zu den Mantelflächen 11,12.

### Bezugszeichenliste

- 1: Werkzeug
- 2,3,4: Bereiche, Seitenfläche
- 5: Einhüllende
- 6: Stirnseite
- 6': Kegelspitze
- 7: Übergang
- 8,9: Stirnfläche
- 10,11,12: Beschichtung
- 13: Symmetrieachse
- 14: Bearbeitungsmaschine
- 15: Werkstück
- 16: Oberfläche des Werkstücks
- 17: Vertiefung
- 18: herauszuarbeitende Kontur
- 19: Flanke

## Patentansprüche

1. Verfahren zur Herstellung von Zahnersatzteilen in einer Bearbeitungsmaschine (14) mit einem Werkzeug (1) zum Querseitenbearbeiten und Längsvorschubbearbeiten, **dadurch gekennzeichnet, dass** ein Werkzeug (1) mit unterschiedliche Durchmesser aufweisenden abgestuften Bereichen mit jeweils einer Mantelfläche (2, 3, 4) zur Querseitenbearbeitung und mit jeweils einer Stirnfläche (6, 8, 9) zur Längsvorschubbearbeitung verwendet wird, wobei der Durchmesser der abgestuften Bereiche (2, 3, 4) zur Stirnseite (6) hin kleiner wird.

2. Verfahren nach Anspruch 1, **dadurch gekennzeichnet, dass** die Bearbeitung durch Schleifen erfolgt.

3. Verfahren nach Anspruch 1 oder 2, **dadurch gekennzeichnet, dass** der Durchmesser des Werkzeugs (1) in den abgestuften Bereichen (2, 3, 4) jeweils konstant ist.

4. Verfahren nach einem der Ansprüche 1 bis 3, **dadurch gekennzeichnet, dass** der Durchmesser der abgestuften Bereiche (2, 3, 4) zu einer Stirnseite (6) hin so abnimmt, dass die Einhüllende (5) einen Kegel beschreibt, der einen Öffnungswinkel (α)zwischen 4 und 20 Grad aufweist.

5. Verfahren nach einem der Ansprüche 2 bis 4, **dadurch gekennzeichnet, dass** die Bearbeitung mit einer Schleifkörner enthaltenden eine Beschichtung (10, 11, 12) erfolgt, wobei die Korngröße der Beschichtung (10, 11, 12) in zumindest zwei verschiedenen Bereichen (2, 3, 4, 6, 8, 9) unterschiedlich ist.

6. Verfahren nach einem der Ansprüche 1 bis 5, **dadurch gekennzeichnet, dass** gleichzeitig mittels der Stirnfläche (6) und der benachbarten Mantelfläche (2) an der Werkzeugspitze eine Feinbearbeitung und mittels der zu der Werkzeugspitze beabstandeten Stirnfläche (8, 9) und/oder der Mantelfläche (3, 4) eine Grobbearbeitung erfolgt.

7. Werkzeug (1) zur Bearbeitung von Werkstücken zur Herstellung von Zahnersatzteilen mittels Querseitenbearbeiten und Längsvorschubbearbeiten, **dadurch gekennzeichnet, dass** das Werkzeug (1) unterschiedliche Durchmesser aufweisende abgestufte Bereiche mit jeweils einer Mantelfläche (2, 3, 4) zur Querseitenbearbeitung und mit jeweils einer Stirnfläche (6, 8, 9) zur Längsvorschubbearbeitung aufweist, wobei der Durchmesser der abgestuften Bereiche (2, 3, 4) zur Stirnfläche (6) hin kleiner wird.

8. Werkzeug (1) nach Anspruch 7, **dadurch gekennzeichnet, dass** der Durchmesser des Werkzeugs in den abgestuften Bereichen (2, 3, 4) jeweils konstant ist.

9. Werkzeug (1) nach Anspruch 7 oder 8, **dadurch gekennzeichnet, dass** der Durchmesser der abgestuften Bereiche (2, 3, 4) zur Stirnseite (6) hin so abnimmt, dass die Einhüllende (5) einen Kegel beschreibt, der einen Öffnungswinkel (α) zwischen 4 und 20 Grad aufweist.

10. Werkzeug (1) nach einem der Ansprüche 7 bis 9, **dadurch gekennzeichnet, dass** bei dem Werkzeug (1) der Übergang (7) von der stirnseitigen Mantelfläche (2) mit einem ersten Radius (R₁) zur Stirnseite (6) mit einem gegenüber dem ersten Radius kleineren zweiten Radius (R₂) so gestaltet ist, dass er eine Krümmung gemäß einem dritten Radius (R₃) ebenfalls kleiner als der erste Radius (R₁) aufweist.

11. Werkzeug (1) nach einem der Ansprüche 7 bis 10, **dadurch gekennzeichnet, dass** an der Stirnseite (6) eine Kegelspitze (6') angeordnet ist, welche einen Kegelwinkel von 30° bis 60°, insbesondere von 45° aufweist.

12. Werkzeug (1) nach einem der Ansprüche 7 bis 11, **dadurch gekennzeichnet, dass** das Werkzeug (1) eine Beschichtung aufweist (10, 11, 12).

13. Werkzeug (1) nach Anspruch 12, **dadurch gekennzeichnet, dass** die Beschichtung (10, 11, 12) in verschiedenen Bereichen unterschiedlich ist.

14. Werkzeug (1) nach Anspruch 12 oder 13, **dadurch gekennzeichnet, dass** die Beschichtung (10, 11, 12) Schleifkörner enthält.

15. Werkzeug (1) nach Anspruch 14, **dadurch gekennzeichnet, dass** die Korngröße der Beschichtung (10, 11, 12) in verschiedenen Bereichen unterschiedlich ist.

16. Werkzeug (1) nach Anspruch 14 oder 15, **dadurch gekennzeichnet, dass** die Schichtdicke der Beschichtung (10, 11, 12) im Bereich (2, 6, 7) der Werkzeugspitze größer ist.

17. Bearbeitungsmaschine (14) zur Herstellung von Zahnersatzteilen mit einem Werkzeug (1) zum Querseitenbearbeiten und Längsvorschubbearbeitung, **gekennzeichnet durch** ein Werkzeug (1) nach einem der Ansprüche 7 bis 16.

## Claims

1. A method of producing dental prosthetic items in machining equipment (14) equipped with a tool (1) for transverse lateral machining and longitudinal feed machining, **characterized in that** a tool (1) exhibiting stepped regions having different diameters and comprising in each case a lateral surface (2, 3, 4) for transverse lateral machining and a front surface (6, 8, 9) for longitudinal feed machining is used, the diameters of said stepped regions (2, 3, 4) being dimensioned so as to decrease toward the forward face (6) of said tool.

2. A method as defined in claim 1, **characterized in that** machining is carried out by grinding.

3. A method as defined in claim 1 or claim 2, **characterized in that** the diameter of said tool (1) within each of said stepped regions (2, 3, 4) is constant.

4. A method as defined in any one of claims 1 to 3, **characterized in that** the tool diameters of said stepped regions (2, 3, 4) decrease toward said forward face (6) such that the envelope (5) describes a cone having an aperture angle (α) of between 4 and 20 degrees.

5. A method as defined in any one of claims 2 to 4, **characterized in that** machining is carried out with a coating (10, 11, 12) containing abrasive particles, the particle size of said coating (10, 11, 12) being different in at least two different regions (2, 3, 4, 6, 8, 9).

6. A method as defined in any one of claims 1 to 5, **characterized in that** precision machining is carried out at the tip of the tool simultaneously by said forward face (6) and the adjacent lateral surface (2) and coarse machining is carried out by a front surface (8, 9) spaced at a distance from said tool tip and/or by a lateral surface (3, 4).

7. A tool (1) for machining workpieces for the production of dental prosthetic items by means of transverse lateral machining and longitudinal feed machining, **characterized in that** said tool (1) has stepped regions having different diameters and comprising in each case a lateral surface (2, 3, 4) for transverse lateral machining and a front surface (6, 8, 9) for longitudinal feed machining, the diameters of said stepped regions (2, 3, 4) being dimensioned so as to decrease toward the forward face (6) of said tool.

8. A tool (1) as defined in claim 7, **characterized in that** the diameter of the tool within each of the stepped regions (2, 3, 4) is constant.

9. A tool (1) as defined in claim 7 or claim 8, **characterized in that** the tool diameters in the stepped regions (2, 3, 4) decrease toward said forward face (6) such that the envelope (5) describes a cone having an aperture angle (α) of from 4 to 20 degrees.

10. A tool (1) as defined in any one of claims 7 to 9, **characterized in that** on said tool (1) the transition region (7) between the forward lateral surface (2) having a first radius (R1) and said forward face (6) having a second radius (R2) smaller than said first radius is designed such that it forms a curvature having a third radius (R3) which is also smaller than said first radius (R1).

11. A tool (1) as defined in any one of claims 7 to 10, **characterized in that** at said forward face (6) there is disposed a conical point (6') which has a cone angle of from 30° to 60°, particularly 45°.

12. A tool (1) as defined in any one of claims 7 to 11, **characterized in that** said tool (1) has a coating (10, 11, 12).

13. A tool (1) as defined in claim 12, **characterized in that** the nature of said coating (10, 11, 12) is different in the various regions.

14. A tool (1) as defined in claim 12 or claim 13, **characterized in that** said coating (10, 11, 12) contains abrasive particles.

15. A tool (1) as defined in claim 14, **characterized in that** the particle size of said coating (10, 11, 12) is different in the various regions.

16. A tool (1) as defined in claim 14 or claim 15, **characterized in that** the layer thickness of said coating (10, 11, 12) is greater in the region (2, 6, 7) at the tip of said tool.

17. Machining equipment (14) for producing dental prosthetic items, comprising a tool (1) for transverse lateral machining and longitudinal feed machining, **characterized by** a tool (1) as defined in any one of claims 7 to 16.

## Revendications

1. Procédé de fabrication de prothèses dentaires dans une machine d'usinage (14) comprenant un outil (1) pour l'usinage latéral transversal et pour l'usinage par avance longitudinale, **caractérisé en ce que** l'on utilise un outil (1) avec des parties échelonnées présentant différents diamètres avec une surface d'enveloppe respective (2, 3, 4) pour l'usinage latéral transversal et avec une surface frontale respective (6, 8, 9) pour l'usinage par avance longitudinale, le diamètre des régions échelonnées (2, 3, 4) diminuant en direction du côté frontal (6).

2. Procédé selon la revendication 1, **caractérisé en ce que** l'usinage s'effectue par meulage.

3. Procédé selon la revendication 1 ou 2, **caractérisé en ce que** le diamètre de l'outil (1) dans les régions échelonnées (2, 3, 4) reste à chaque fois constant.

4. Procédé selon l'une quelconque des revendications 1 à 3, **caractérisé en ce que** le diamètre des régions échelonnées (2, 3, 4) diminue vers un côté frontal (6) de telle sorte que l'extrémité d'enveloppement (5) décrive un cône qui présente un angle d'ouverture (α) compris entre 4 et 20 degrés.

5. Procédé selon l'une quelconque des revendications 2 à 4, **caractérisé en ce que** l'usinage s'effectue avec un revêtement (10, 11, 12) contenant des grains abrasifs, la taille des grains du revêtement (10, 11, 12) étant différente dans au moins deux régions différentes (2, 3, 4, 6, 8, 9).

6. Procédé selon l'une quelconque des revendications 1 à 5, **caractérisé en ce que** l'on effectue en même temps au moyen de la surface frontale (6) et de la surface d'enveloppe adjacente (2) à la pointe de l'outil un usinage fine et au moyen de la surface frontale (8, 9) espacée de la pointe de l'outil et/ou de la surface d'enveloppe (3, 4), un usinage grossier.

7. Outil (1) pour l'usinage de pièces pour la fabrication de prothèses dentaires au moyen d'usinage latéral transversal et d'usinage par avance longitudinale, **caractérisé en ce que** l'outil (1) présente des régions échelonnées de différents diamètres avec à chaque fois une surface d'enveloppe (2, 3, 4) pour l'usinage latéral transversal et une surface frontale (6, 8, 9) pour l'usinage par avance longitudinale, le diamètre des régions échelonnées (2, 3, 4) diminuant vers la surface frontale (6).

8. Outil (1) selon la revendication 7, **caractérisé en ce que** le diamètre de l'outil dans les régions échelonnées (2, 3, 4) reste à chaque fois constant.

9. Outil (1) selon la revendication 7 ou 8, **caractérisé en ce que** le diamètre des régions échelonnées (2, 3, 4) diminue vers le côté frontal (6) de telle sorte que l'extrémité d'enveloppement (5) décrive un cône qui présente un angle d'ouverture (α) compris entre 4 et 20 degrés.

10. Outil (1) selon l'une quelconque des revendications 7 à 9, **caractérisé en ce qu'**avec l'outil (1), la transition (7) de la surface d'enveloppe du côté frontal (2) avec un premier rayon (R₁) au côté frontal (6) avec un deuxième rayon (R₂) plus petit que le premier rayon est configurée de telle sorte qu'elle présente une courbure suivant un troisième rayon (R₃) également plus petit que le premier rayon (R₁).

11. Outil (1) selon l'une quelconque des revendications 7 à 10, **caractérisé en ce que** l'on prévoit sur le côté frontal (6) une pointe conique (6') qui présente un angle de conicité de 30° à 60°, notamment de 45°.

12. Outil (1) selon l'une quelconque des revendications 7 à 11, **caractérisé en ce que** l'outil (1) présente un revêtement (10, 11, 12).

13. Outil (1) selon la revendication 12, **caractérisé en ce que** le revêtement (10, 11, 12) est différent dans différentes régions.

14. Outil (1) selon la revendication 12 ou 13, **caractérisé en ce que** le revêtement (10, 11, 12) comprend des grains abrasifs.

15. Outil (1) selon la revendication 14, **caractérisé en ce que** la taille des grains du revêtement (10, 11, 12) est différente dans des régions différentes.

16. Outil (1) selon la revendication 14 ou 15, **caractérisé en ce que** l'épaisseur de couche du revêtement (10, 11, 12) est plus grande dans la région (2, 6, 7) de la pointe de l'outil.

17. Machine d'usinage (14) pour la fabrication de prothèses dentaires comprenant un outil (1) pour l'usinage latéral transversal et pour l'usinage par avance longitudinale, **caractérisée par** un outil (1) selon l'une quelconque des revendications 7 à 16.
